# EUROPÄISCHE PATENTSCHRIFT

(11) **EP 1 428 060 B1**
(45) Veröffentlichungstag und Bekanntmachung des Hinweises auf die Patenterteilung: **22.10.2008**
(21) Anmeldenummer: 02772077.0
(22) Anmeldetag: 19.09.2002
(51) Int. Cl.: G02B 21/00, G02B 21/08, G02B 21/24, G01N 21/95, G05B 19/425

(54) **VORRICHTUNG UND VERFAHREN ZUR PLANPARALLELEN AUSRICHTUNG EINER ZU INSPIZIERENDEN EBENEN OBJEKTOBERFLÄCHE ZU EINER FOKUSEBENE EINES OBJEKTIVES**
DEVICE AND METHOD FOR PLANE-PARALLEL ORIENTATION OF A THE SURFACE OF AN OBJECT TO BE EXAMINED IN RELATION TO A FOCUS PLANE OF A LENS
DISPOSITIF ET PROCEDE D'ORIENTATION PARALLELEPIPEDIQUE D'UNE SURFACE PLANE D'UN OBJET A CONTROLER RELATIVEMENT A UN PLAN DE FOCALISATION D'UN OBJECTIF

(30) Priorität: 19.09.2001 DE 10146221
(43) Veröffentlichungstag der Anmeldung: 16.06.2004
(73) Patentinhaber: ICOS VISION SYSTEMS N.V., 3001 Heverlee (BE)
(72) Erfinder: LECHNER, Johannes, 80798 München (DE); GERHARD, Detlef, 81829 München (DE)
(74) Vertreter: Quintelier, Claude
(86) Internationale Anmeldenummer: PCT/DE2002/003522
(87) Internationale Veröffentlichungsnummer: WO 2003/027748

(56) Entgegenhaltungen:
- US-A- 4 785 177
- US-A- 5 239 355
- PATENT ABSTRACTS OF JAPAN vol. 011, no. 293 (P-619), 22. September 1987 (1987-09-22) & JP 62 088009 A (MATSUSHITA ELECTRIC WORKS LTD), 22. April 1987 (1987-04-22)
- PATENT ABSTRACTS OF JAPAN vol. 1999, no. 13, 30. November 1999 (1999-11-30) & JP 11 231228 A (NIKON CORP), 27. August 1999 (1999-08-27)
- PATENT ABSTRACTS OF JAPAN vol. 2000, no. 15, 6. April 2001 (2001-04-06) & JP 2000 352661 A (OLYMPUS OPTICAL CO LTD), 19. Dezember 2000 (2000-12-19)
- PATENT ABSTRACTS OF JAPAN vol. 2000, no. 07, 29. September 2000 (2000-09-29) & JP 2000 098257 A (OLYMPUS OPTICAL CO LTD), 7. April 2000 (2000-04-07)
- PATENT ABSTRACTS OF JAPAN vol. 1999, no. 04, 30. April 1999 (1999-04-30) & JP 11 006965 A (JAPAN ENERG BUNSEKI CENTER:KK), 12. Januar 1999 (1999-01-12)

## Beschreibung

Vorrichtung und Verfahren zur planparallelen Ausrichtung einer zu inspizierenden ebenen Objektoberfläche zu einer Fokusebene eines Objektives.

Die Erfindung betrifft eine Vorrichtung und ein Verfahren, womit bei der optischen Inspektion einer ebenen Objektoberfläche deren planparallele Ausrichtung einer Fokusebene einer zu einem Messkopf gehörenden Objektives erzielbar ist. Bei der optischen Inspektion von Objekten bzw. von Objektoberflächen, wie beispielsweise der Oberfläche von Wafern, weist die jeweilige Optik eine wesentliche Vergrösserung auf. Einhergehend ist der Tiefenschärfebereich relativ klein. Wird dieser Tiefenschärfebereich kleiner als der Abstandsfehler der beim Abstand zwischen Objektiv und Objekt auftreten kann, so führt dies zu teilweise unscharfen Abbildungen. Gerade bei der Inspektion grösser Objektoberflächen treten verstärkt derartige Abstandstoleranzen auf. Diese Abstandsfehler ergeben sich in Summe aus Planparallelitätsfehlern von Inspektionstisch, Objektaufnahme, wie beispielsweise Chuck, und Objekt gegenüber der Fokusebene eines Objektives eines Messkopfes.

Aus US-A-5,239,355, sind eine Anordnung und ein Verfahren bekannt um die flache Oberfläche eines Objektes derart anzuordnen, dass die Oberfläche immer senkrecht zur optischen Achse eines Objektives liegt. Dazu werden drei Verstellelemente, worauf die Oberfläche sich stützt benutzt.

Bisher bekannte Systeme sind im wesentlichen auf die Inspizierung kleiner Objektoberflächen ausgelegt. In diesem Fall wird das Bild über einen Autofokusbetrieb eines Mikroskops einer Inspektionseinheit scharf gestellt. Eine andere Möglichkeit besteht darin, das Objektiv in die Scharfstellung zu verfahren. Hierbei wird zwischen Objektiv und Mikroskopaufbau ein Adapterring mit einem Stellelement eingebaut. Über den Adapterring kann die Distanz zwischen Objekt und Objektiv so eingestellt werden, dass eine Scharfstellung des Bildes erfolgt. Eine weitere Möglichkeit besteht im manuellen Verfahren des Mikroskops über beispielsweise ein Stellrad, wodurch der Abstand zwischen Objektiv und Objektoberfläche so korrigiert wird, dass die Aufsicht der Objektebene scharf im Okular bzw. dem Kamerachip einer der Optik nachgeschalteten Kamera abgebildet wird. Bei der Inspektion kleinerer Objektflächen ist in der Regel eine einmalige Fokussierung ausreichend.

Der Erfindung liegt die Aufgabe zugrunde, ein Verfahren und eine Vorrichtung zur planparallelen Ausrichtung einer ebenen ausgedehnten Objektoberfläche zu einer Fokusebene eines Objektives bereitzustellen, wobei die Inspektion der Objektoberfläche an mehreren Stellen möglich ist.

Die Lösung dieser Aufgabe geschieht durch die Merkmalskombination der Patentansprüche 1 bzw. 5.

Der Erfindung liegt die Erkenntnis zugrunde, dass mit einer Vorrichtung und mit einem Verfahren entsprechend dieser Patentanmeldung grossflächige im wesentlichen ebene Oberflächen optisch mittels eines Messkopfes inspizierbar sind, wobei diese senkrecht zur Achse der im Messkopf vorhandenen Optik positioniert sind und wodurch die Merkmale der Erfindung eine sehr genaue Einstellung der Plan parallelität zwischen der Fokusebene der Optik und der zu vermessenden Oberfläche erreichbar ist. Dabei sind die Elemente der Vorrichtung dazu vorgesehen, einen flächig ausgedehnten Körper, beispielsweise einen Wafer oder einen Frame aufzunehmen, zu halten und zur Inspektion dessen grossflächiger Oberfläche relativ zu einem Messkopf und eventuell mit seinem Abstandsmesssystem lateral, in x- und y- Richtung zu verfahren. Für jeden dabei einzunehmenden Zustand muss die aktuelle Oberflächenbildaufnahme optisch scharf eingestellt sein.

Mittels des Einsatzes von drei Stellantrieben können die Einjustierungen zur Erzielung der Planparallelität zwischen Fokusebene und Objektoberfläche erreicht werden. Die insbesondere als Piezoaktoren ausgebildeten Stellantriebe weisen beispielsweise Verstellbereiche von 100 bis 400 µm auf. Eine Verstellung erfolgt in z-Richtung, was der Veränderung eines Höhenwertes entspricht.

Für jede der in der Erfindung vorgesehenen Variante wird als erster Schritt allen drei Oberflächenpunkten, die sich in vorteilhafterweise über den jeweils mindestens drei Stellantrieben befinden, mittels der Optik des Messkopfes eine Scharfeinstellung vorgenommen und abgespeichert. Dazu werden die jeweiligen Punkte mit dem Messkopf lateral angefahren und anschließend die jeweiligen darunter liegenden Verstellelemente in z-Richtung derart verstellt, dass eine optische Scharfeinstellung vorliegt. Wird dieser Vorgang an beispielsweise drei Verstellelementen an der darüber liegenden zu inspizierenden Oberfläche durchgeführt, so bedeutet dies für die Objektoberfläche eine insgesamt planparallele Ausrichtung zu einer Fokusebene der Optik. Ausgehend von diesem Zustand, bei dem die Planparallelität der Ebenen hergestellt ist, kann nur die Objektoberfläche inspiziert werden.

Weitere auf der Objektoberfläche vorhandene Erhöhungen oder Vertiefungen können weitere Fehlerkorrekturen erfordern. In vorteilhafter Weise wird dabei ein Raster von Stützstellen vor der Inspektion der Oberfläche auf dieser hergestellt, wobei für jeden Stützpunkt die x, y-Daten bekannt sind und über die gleichmäßige Höhenkorrektur sämtlicher Stellelemente eine z-Position der aktuellen Stützstelle angefahren wird, die einer optischen Scharfstellung entspricht. Durch dieses Raster von Stützstellen, die dem System bekannt sind, können abschnittsweise Fehlerkorrekturen für topografische Fehler auf dem Objekt angebracht werden.

Der vorteilhafte Einsatz eines dem Messkopf parallel geschalteten und ebenfalls auf die Objektoberfläche ausgerichteten Abstandsmesssysteme erübrigt die Aufnahme eines Rasters von Stützstellen. Nach dem ersten oben beschriebenen Verfahrensschritt zur planparallelen Einstellung der Objektoberfläche zu einer Fokusebene der Optik des Messkopfes wird mittels des Abstandsmesssystems regelmäßig der Abstand zu einem Messpunkt mit bekannten x-, y-Koordinaten ermittelt, wobei während der relativen Bewegung zwischen Abstandsmesssystem und Messkopf einerseits und zwischen der Objektoberfläche zuerst der Messpunkt vom Abstandsmesssystem bearbeitet wird und durch die vorhandene relative Verfahrgeschwindigkeit und durch den vorhandenen Abstand zwischen Abstandsmesssystem und Messkopf zeitverzögert der Messkopf zur Inspektion den Messpunkt erreicht. Somit können durch das Abstandsmesssystem regelmäßig neue Messpunkte ermittelt werden, die, falls sie nicht innerhalb einer zulässigen Toleranzbreite liegen, Fehlerkorrekturen ermöglichen.

Die Regelung geschieht über die Bildinformation einer 2D-Kamera bzw. 1D-Kamera, beispielsweise einer Zeilenkamera über die Kontrastmessung. Hierbei wird für die Regelung der aufzunehmende Bereich (Area of Interest , AOI) verwendet, in dem die interessierenden Objekte bzw. Teile der Objekte liegen. Hierdurch wird auch bei einem Höhenversatz der interessierenden Objekte gegenüber der Umgebung scharf abgebildet.

Im folgenden werden anhand von schematischen Figuren die Erfindung nicht einschränkende Ausführungsbeispiele beschrieben:

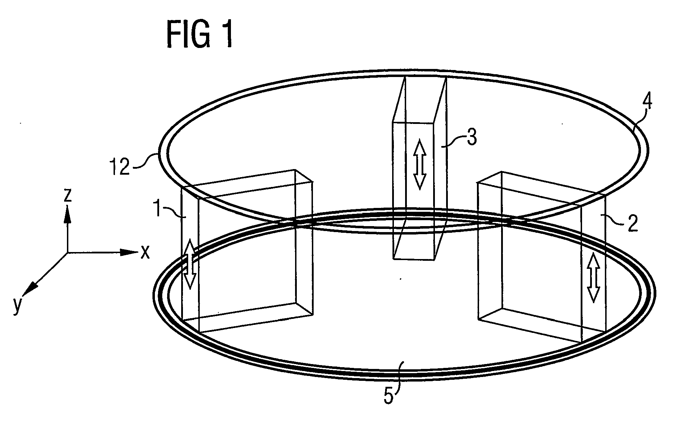

- Figur 1: zeigt eine Aufnahmevorrichtung zur Aufnahme von flächig ausgebildeten Objekten, die beispielsweise bei der Waferinspektion eingesetzt werden, und

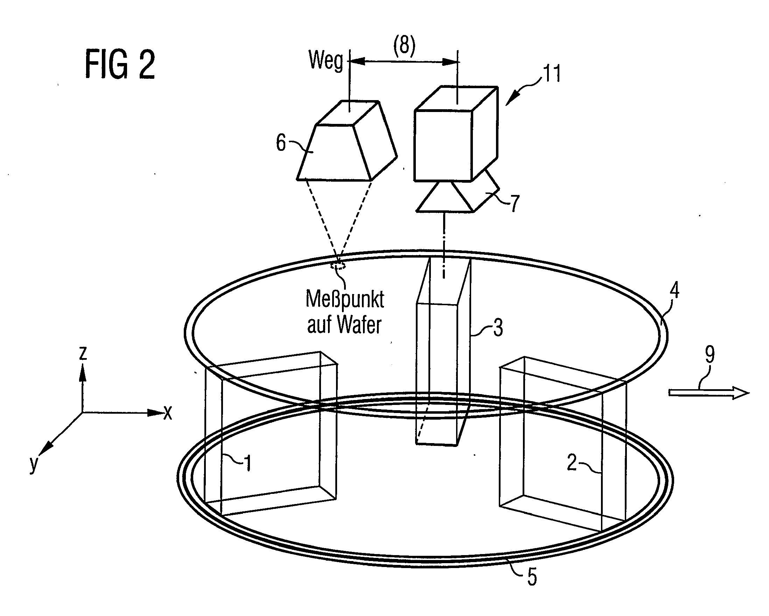

- Figur 2: zeigt eine Ansicht des gesamten Inspektionssystems mit Messkopf und Optik, Abstandsmesssystem und Piezoaktoren.

Es wird ein System zur Inspektion von Waferoberflächen beschrieben, wobei ein hochgenaues Nachfahren der Objektoberfläche mit einer Genauigkeit unterhalb des geforderten Tiefenschärfebereiches ermöglicht wird. Verkippungen des dabei verwendeten Messtisches lassen sich ausgleichen, so dass auch innerhalb des aufgenommen Bildes der gesamte Bildbereich scharf ist. Vor allem bei der Inspektion größerer Oberflächen mit hoher Inspektionsgeschwindigkeit ist dieses vorgestellte Verfahren dem optischen Autofokusprinzip oder der manuellen Fokussierung überlegen.

Zur Erzielung einer Planparallelität zwischen einer Objektoberfläche und einer Fokusebene eines Objektives im Messkopf werden minimal drei Stellelemente, beispielsweise Piezoaktoren 1, 2 , 3 eingesetzt. Hierbei sind die Stellelemente in die Objektaufnahme integriert. Die Objektaufnahme ist beispielsweise dargestellt durch einen sog. Chuck, der aus oberer und unterer Chuckplatte besteht. Die Stellelemente 1, 2, 3, dargestellt durch Piezoaktoren, sind entsprechend zwischengeschaltet.

Zur Einstellung der Planparallelität zwischen Fokusebene und Objektoberfläche wird im Rahmen einer Vormessung zunächst die Objektaufnahme mit dem Objekt unter dem Objektiv derart verfahren, dass das Objektiv 7 über einem Piezoaktor positioniert ist. Durch Bewegung des Piezoaktors über dem das Objektiv aktuell positioniert ist, wird eine Scharfeinstellung erzielt, d.h. das Bild, das in der Kamera im Messkopf 11 abgebildet wird, ist scharf eingestellt. Dieser Vorgang wiederholt sich für jeden Piezoaktor bzw. für eine Stützstelle, die über der Auflagefläche des Objektes auf dem Piezoaktor festgelegt wird. Bei diesem ersten Verfahrensschritt werden die Piezoaktoren einzeln verstellt, derart, dass bei der Scharfstellung eines Stützpunktes der zugehörige Piezoaktor den Stützpunkt in die Tiefenschärfenebene des Objektives 7 bewegt. Nach Durchführung dieser Routine sind sämtliche Fehler, die durch Fehler in der Planparallelität erzeugt wurden, eliminiert. Mit Planparallelität ist die Parallelität von zwei ebenen Flächen gemeint.

Zur Regelung der Objektaufnahme, dem Chuck, wird eine Elektronik verwendet, die zumindest teilweise in der Objektaufnahme untergebracht ist. Diese Elektronik beinhaltet beispielsweise den Messverstärker für die integrierte Fehlerkorrektur der Stellelemente, sowie die Ansteuerung dieser Stellelemente. Die Charakteristik dieser Stellelemente ist in der Regel nicht hysteresebehaftet, so dass beispielsweise eine auf einem Piezoaktor aufgegebene Spannung einer exakten Elongation dieses Aktors entspricht.

Zur Herstellung der Planparallelität zwischen Fokusebene und Objektoberfläche können auch mindestens drei unterschiedliche beliebig gewählte Positionen auf der Objektoberfläche ausgewählt werden. Prinzipiell kann mit oder ohne Objekt justiert werden, so dass beispielsweise für den Fall, dass die obere Chuckplatte 4 kein Objekt trägt, die Planparallelität zwischen Fokusebene und oberer Chuckplatte 4 hergestellt wird. Dies könnte für den Fall von Bedeutung sein, dass ein in sich nicht planparalleler Wafer planparallel geschliffen werden soll. Somit ist zunächst durch die planparallele Ausrichtung der Oberseite des oberen Chucks 4 eine Seite eines danach aufliegenden Wafers planparallel ausgerichtet. Die schräg dazu verlaufende obere Seite eines Wafers kann nun korrigiert werden.

Bei einem Objekt 12 kann es sich um einen Wafer oder um ein Frame handeln, wobei ein Frame durch einen Spannring dargestellt wird, wobei auf einer Folie ein Wafer aufgeklebt ist.

Die nach dem ersten wesentlichen Verfahrensschritt ausgerichtete Oberfläche wird im Rahmen einer Vormessung in verschiedenen Positionen abgetastet und die Messwerte werden als Stützstellen zur Bestimmung der Lage der Objektoberfläche verwendet. Das Objekt wird über dem Messpunkt positioniert. Es wird die Bildschärfe gemessen und bei unscharfem Bild die gesamte Objektaufnahme über die Stellelemente, Piezoaktoren, gleichmäßig angehoben oder gesenkt, bis das Bild scharf ist. Die so ermittelte z-Position für diesen Messpunkt wird der Stützstelle zugeordnet. Über die so ermittelten Stützstellen wird für die Inspektion des Objektes eine Messstrecke über x, y, z ermittelt. In dieser liegen die Abstandstoleranzen am und um den Messpunkt innerhalb des Tiefenschärfenbereiches des Objektives.

Bei einem zusätzlichen Einsatz eines Abstandsmesssystems, das mit den Stellelementen zusammenwirkt und dem Messkopf mit dem Objektiv nebengeordnet ist, existiert weiterhin eine Möglichkeit zur Online-Korrektur, d.h. zur Korrektur während des Betriebes. Mit diesem Abstandsmesssystem ist eine eindeutige Abstandsmessung zwischen Objektiv und Objektoberfläche bzw. zwischen Objektiv und Objektaufnahme möglich. Liegt das Objekt bzw. ein Objektpunkt innerhalb des Tiefenschärfenbereiches des Objektives, wobei über die Stellelemente nachgeregelt wird, so wird der Messwert des Abstandsmesssystems zusammen mit den lateralen Koordinaten des augenblicklichen Messpunktes als Arbeitspunkt gespeichert. Bei einer anschließenden Vermessung eines Objektes wird in Verbindung mit einer internen Regelung die Objektaufnahme über die Piezoaktoren immer derart verfahren, dass der vor Beginn der Messung definierte Arbeitspunkt, der einen Sollwert darstellt, auch während der Messung beibehalten wird. Dies bedeutet, dass die Differenz zwischen dem während der Messung aufgenommenen Abstandswert, was dem Istwert entspricht, und dem definierten Arbeitspunkt, dem Sollwert, auf ein Minimum geregelt wird.

Das Abstandsmesssystem wird bezogen auf die Bewegung eines Oberflächenpunktes unter dem Messkopf 11 derart relativ zum Messkopf 11 positioniert, dass ein beliebig herausgegriffener Punkt an der Objektoberfläche während einer Inspektion zuerst das Abstandsmesssystem passiert und dann nach einem bestimmten Weg 8, der dem Abstand zwischen dem Abstandsmesssystem und dem Messkopf entspricht, unter dem Messkopf 11 erscheint. Dies bedeutet, dass Punkte, die vom Abstandsmesssystem erfasst wurden, erst nach einer bestimmten Zeit, die durch den Weg 8 und die Bewegungsgeschwindigkeit errechenbar ist, von dem Objektiv 7 des Messkopfes 11 erfasst werden. Die vom Abstandsmesssystem ermittelten Werte werden verzögert dem Stellsystem zugestellt, so dass die Korrektur über die Stellelemente dann erfolgt, wenn das Objektiv 7 den Messpunkt überfährt. Durch Verwendung mehrerer Abstandssensoren 6 kann eine Verkippung gemessen und korrigiert werden. Jedes Stellelement ist für sich geregelt, so dass beispielsweise eine Temperaturdrift ausgeglichen werden kann.

## Patentansprüche

1. Vorrichtung zur planparallelen Ausrichtung einer zu inspizierenden ebenen Objektoberfläche zu einer Fokusebene eines Objektives (7), bestehend aus:
- einem das Objekt (12) aufnehmenden oberen Objektträger (4), der an mindestens drei Stützorten abgestüzt ist, wobei an mindestens zwei der drei Stützorte mit einem unteren Objektträger (5) zusammenwirkende Stellantriebe (1, 2, 3) angreifen,
- einem über der Objektoberfläche positionierten und relativ dazu lateral verfahrbaren Messkopf (11) mit dem Objektiv (7) zur Inspektion der Objektoberfläche, welcher Messkopf (11) mit dem Objektiv jeweils derart verfahrbar ist, dass das Objektiv über die Stützorte positionierbar ist, wobei auf der Objektoberfläche mittels der Stellantriebe (1, 2, 3) die jeweiligen Stützorte über den Stellantrieben in den Fokusbereich des Objektives (7) einstellbar sind zur Erzielung einer Planparallelität zwischen der Objektoberfläche und der Fokusebenen.

2. Vorrichtung nach Anspruch 1, bei dem an den mindestens drei Stützorten Stellantriebe (1,2,3) angreifen.

3. Vorrichtung nach einem der vorhergehenden Ansprüche, bei dem zusätzlich ein zum Messkopf (11) beabstandetes und fixiertes Abstandsmesssystem (6) mit Ausrichtung auf die Objektoberfläche vorhanden ist, durch das Abstandswerte bei gegebener Scharfeinstellung von Objektoberflächenbereichen ermittelbar sind.

4. Vorrichtung nach einem der vorhergehenden Ansprüche, wobei die Stellantriebe (1, 2, 3) Piezoaktoren sind.

5. Verfahren zur planparallelen Ausrichtung einer zu inspizierenden ebenen Objektoberfläche zu einer Fokusebene eines Objektives (7), bestehend aus folgenden Schritten:
- die Objektoberfläche eines auf einer oberen Objektaufnahme (4) gehaltenen Objektes wird durch die einzelne Höhenverstellung von mindestens drei zwischen der oberen Objektaufnahme (4) und einer unteren Objektaufnahme (5) gleichmäßig verteilten die obere Objektaufnahme (4)tragende Stellantriebe (1, 2, 3) planparallel auf die Fokusebene des Objektives (7) eingestellt,
- mittels eines Messkopfes (11) mit dem zugehörigen Objektiv (7) werden jeweils die Höhenwerte der den darunter liegenden Stellantrieben (1, 2, 3) auf der Objektoberfläche zugeordneten Stützorten bei jeweilig optisch scharfer Einstellung ermittelt, gespeichert und vorübergehend am Stellantrieb fixiert, so dass die Objektoberfläche planparallel im Fokusbereich des Objektives (7) liegt.

6. Verfahren nach Anspruch 5, bei dem mindestens drei beliebige unterschiedliche Positionen auf der Objektoberfläche als Messorte verwendet werden.

7. Verfahren nach Anspruch 5 oder 6, bei dem Stützorten innerhalb eines vorgegebenen Rasters auf der Objektoberfläche bei gleichmäßiger Höhenveränderung der Objektoberfläche jeweils optisch scharf eingestellt und höhenbezogen vermessen werden.

8. Verfahren nach einem der Ansprüche 5 bis 7, bei dem durch ein zusätzliches Abstandsmesssystem (6) jeweils mit einem im optisch scharf gestellten Messwert ein Arbeitspunkt kontinuierlich oder diskret innerhalb eines vorgegenenen Zeitintervalls ermittelt wird, so dass eine Differenz zwischen diesem Sollwert und einem Abstands-Ist-Wert regelmäßig zur Verfügung steht und dieser über eine Regelung angepasst wird.

9. Verfahren nach Anspruch 8, bei dem durch den Einsatz mehrerer Abstandsmesssysteme (6) eine Verkippung einer Objektoberfläche messbar und korrigierbar ist.

## Claims

1. A device for plane-parallel orientation of a level surface of an object to be inspected to a focus plane of a lens (7), comprising :
- an upper object carrier (4) for carrying the object (12), which upper object carrier is supported in at least three support places, wherein at least two of the three support places engage with adjustment drives (1, 2, 3) cooperating with a lower object carrier (5);
- a measuring head (11), positioned above a surface of the object and capable to be moved laterally relative to the surface of the object, which measuring head comprises the lens (7) for inspection of the object surface, which measuring head (11) with the lens is each time movable in such a manner that the lens can be positioned above the support places, wherein the respective support places are adjustable by means of the adjustment drives (1, 2, 3) in the focus area of the lens (7) over the object surface in order to obtain a plane-parallelism between the object surfaces and the focus planes.

2. The device according to claim 1, wherein the adjustment drives (1, 2, 3) engage at the at least three support places.

3. The device according to one of the preceding claims, which comprises in addition a distance measurement system (6) which is positioned at a distance from the measuring head (11) and which is fixed thereto, which distance measurement system (6) is oriented with respect to the object surface and which enables to determine distance values at a given focussing of the object surface areas.

4. The device according to one of the preceding claims, wherein the adjustment drives (1, 2, 3) are piezo-actors.

5. A method for plane-parallel orientation of a level surface of an object to be inspected to a focus plane of a lens (7), which method comprises the following steps :
- adjusting, plane-parallel to the focus plane of a lens (7), an object surface of an object hold in an upper object carrier (4) by means of individual height adjustments of at least three adjustment drives (1, 2, 3) which are equally divided between the upper object carrier (4) and an under object carrier (5) and which carry the upper object carrier (4);
- determining, each time by means of a measurement head (11) with appertaining lens (7) the height values of the adjustment drives (1, 2, 3) placed underneath with respect to the support places associated with the object support surfaces by each time optical adjustment in focus, which height values are stored and temporarily fixed at the adjustment drives in such a manner that the object surface is plane-parallel in the focus area of the lens (7).

6. The method according to claim 5, wherein at least three randomly different positions are used as measuring position on the object surface.

7. The method according to claim 5 or 6, wherein the support places in between a predetermined grid on the object surface are focussed at equal height adjustment of the object surface and are measured with respect to their height.

8. The method according to one of the claims 5 to 7 wherein a working point is, each time by means of a focussed measurement value, continuously or punctually measured within a predetermined time period by means of an additional distance measurement system (6), in such a manner that a difference between this reference value and an effective distance value is regularly available and is adaptable by means of an adjustment.

9. The method according to claim 8, wherein by means of a plurality of distance measurement systems (6) a tilting of the object surface can be measured and corrected.

## Revendications

1. Dispositif d'orientation dans des plans parallèles d'une surface plane d'un objet à inspecter par rapport à un plan de focalisation d'un objectif (7), constitué de :
- un porte-objet supérieur (4) recevant l'objet (12), qui est supporté sur au moins trois sites d'appui, des mécanismes d'ajustement (1, 2, 3) qui coopèrent avec un porte-objet inférieur (5) s'appliquant sur au moins deux des trois sites d'appui,
- une tête de mesure (11) comprenant l'objectif (7) destiné à inspecter la surface de l'objet, positionnée au-dessus de la surface de l'objet et pouvant être déplacée latéralement par rapport à celle-ci, laquelle tête de mesure (11) avec l'objectif peut être déplacée à chaque fois de telle manière que l'objectif puisse être positionné au-dessus des sites d'appui, et suivant lequel chacun des sites d'appui au-dessus des mécanismes d'ajustement peut être ajusté dans la zone de focalisation de l'objectif (7) par rapport à la surface de l'objet au moyen des mécanismes d'ajustement (1, 2, 3) afin d'obtenir un parallélisme de plan entre la surface de l'objet et les plans focaux.

2. Dispositif selon la revendication 1, dans lequel des mécanismes d'ajustement s'appliquent sur lesdits au moins trois sites d'appui (1, 2, 3).

3. Dispositif selon l'une des revendications précédentes, dans lequel se trouve en outre un système de mesure de distance (6) fixé à la tête de mesure (11) et espacé de celle-ci, qui est orienté vers la surface de l'objet et grâce auquel des valeurs de distance peuvent être déterminées lors d'un réglage donné de la netteté de zones de la surface de l'objet.

4. Dispositif selon l'une des revendications précédentes, dans lequel les mécanismes d'ajustement (1, 2, 3) sont des piézoacteurs.

5. Procédé d'orientation dans des plans parallèles d'une surface plane d'objet à inspecter par rapport à un plan de focalisation d'un objectif (7), constitué des étapes suivantes :
- la surface d'objet d'un objet maintenu sur un porte-objet supérieur est ajustée dans un plan parallèle au plan de focalisation de l'objectif (7) par le seul réglage en hauteur d'au moins trois mécanismes d'ajustement (1, 2, 3) portant le porte-objet supérieur (4) et uniformément répartis entre le porte-objet supérieur (4) et le porte-objet inférieur (5),
- au moyen d'une tête de mesure (11) avec l'objectif (7) y afférent, les valeurs de hauteur des mécanismes d'ajustement (1, 2, 3) sous-jacents, placés sur les sites d'appui associés à la surface de l'objet, sont chaque fois déterminées lors d'une mise au point optique précise, sont stockées et sont provisoirement fixées sur le mécanisme d'ajustement de sorte que la surface de l'objet se trouve dans un plan parallèle à la zone de focalisation de l'objectif (7).

6. Procédé selon la revendication 5, dans lequel au moins trois quelconques positions différentes sur la surface de l'objet sont utilisées comme sites de mesure.

7. Procédé selon la revendication 5 ou 6, dans lequel des sites d'appui à l'intérieur d'une grille prédéfinie sur la surface de l'objet sont respectivement mis au point optiquement avec précision et calibrés par rapport à leur hauteur en cas de changement uniforme de hauteur de la surface de l'objet.

8. Procédé selon l'une des revendications 5 à 7, dans lequel grâce à un système de mesure de distance supplémentaire (6) chaque fois avec une valeur de mesure de mise au point optique précise, un point opérationnel est continuellement ou discrètement déterminé dans un intervalle de temps prédéfini, de sorte qu'une différence entre cette valeur de consigne et une valeur effective de distance est régulièrement à disposition et que celle-ci est adaptée par un contrôle.

9. Procédé selon la revendication 8, dans lequel en utilisant plusieurs systèmes de mesure de distance (6), un basculement d'une surface de l'objet peut être mesurée et corrigée.
